(19) Europäisches Patentamt / European Patent Office / Office européen des brevets

(11) **EP 2 733 563 A2**

(12) **EUROPEAN PATENT APPLICATION**

(43) Date of publication:
**21.05.2014 Bulletin 2014/21**

(51) Int Cl.:
***G05D 23/275*** (2006.01)

(21) Application number: **13190407.0**

(22) Date of filing: **28.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.10.2012 FI 20126124**

(71) Applicant: **There Corporation OY**
**65100 Vaasa (FI)**

(72) Inventors:
- **Talonen, Matti**
  **66500 Vähäkyrö (FI)**
- **Reinikka, Timo**
  **65300 Vaasa (FI)**

(74) Representative: **Espatent Oy**
**Kaivokatu 10 D**
**00100 Helsinki (FI)**

(54) **Method and apparatus for controlling heating system**

(57)     A method is provided for controlling a heating system, wherein the energy consumption being charged based on spot prices, the method comprises: receiving temperature information; maintaining energy consumption information and degree day information of a first time period. The method further comprises receiving spot price information for the energy; defining an energy consumption parameter using the energy consumption information and the degree day information of the first time period; defining degree day information of a day using the temperature information; determining daily heating energy consumption using the energy consumption parameter and the degree day information of a day; determining a heating time needed to achieve the daily heating energy consumption; defining the heating time with a start time and a stop time; and selecting the start time to optimize the heating time taking place during lower spot prices based on the spot price information; and activating a heating source of the heating system based on the selected start time.

Fig. 2

## Description

TECHNICAL FIELD

The present application generally relates to a system, method and apparatus for controlling a heating system.

BACKGROUND ART

A heating system typically comprises a heating source that provides a heating effect for a heating system. The heating system may be configured to provide heating for a dedicated environment, for example a building or other limited space.

Different heating sources for a heating system exist, for example oil-based heating and electricity-based heating. When building a heating system, long-term costs may be estimated for different heating energies available and decisions made based on the available information. However, prices and other quality of service parameters typically change in long-term over the years and decision making for the utilized heating energy may be difficult. Furthermore, the prices may vary in short-term as well, for example in monthly-basis, even on hourly-basis, depending on consumption peaks. Spot price energy provision makes the cost estimating for consumed energy, such as electricity, short-term in time. Prices for the electricity may vary hourly-based.

Depending on outside temperature, the amount of heating for a building may vary. When the temperature outside decreases, the amount of heating increases. The increased amount of heating may be achieved by increasing the heating time, for example. Another option might be to increase the power of the heating apparatus or increasing both. Also the insulation of the building may affect the amount of heating needed. A user may switch manually the heating to take place during cheaper times of a day, such as night-time.

A solution is needed for controlling a heating system in such a way that short-term dynamic prices of energy and changing outside temperature is taken into consideration to provide an effective and dynamic heating control system.

SUMMARY

According to a first example aspect of the invention there is provided a method for controlling a heating system, wherein the energy consumption being charged based on spot prices, the method comprising:

    receiving temperature information;
    maintaining energy consumption information and degree day information of a first time period;
    receiving spot price information for the energy;
    defining an energy consumption parameter using the energy consumption information and the degree day information of the first time period;
    defining degree day information of a day using the temperature information;
    determining daily heating energy consumption using the energy consumption parameter and the degree day information of a day;
    determining a heating time of a heating source of the heating system needed to achieve the daily heating energy consumption;
    defining the heating time with a start time and a stop time;
    selecting the start time to optimize the heating time taking place during lower spot prices based on the spot price information; and
    activating the heating source of the heating system based on the selected start time.

The temperature information may comprise:

    an indoor reference temperature; and
    an outdoor mean temperature.

In an embodiment, the method further comprises:

    defining the degree day information of a day by subtracting the outdoor mean temperature from the indoor reference temperature.

In an embodiment, the method further comprises:

    defining the energy consumption parameter by dividing the energy consumption information with the degree day information of the first time period.

In an embodiment, the method further comprises:

    determining the daily heating energy consumption by multiplying the energy consumption parameter and the degree day information of a day.

In an embodiment, the energy consumption information comprises heating energy consumption information.

In an embodiment, the method further comprises:

    estimating non-heating energy consumption based on energy consumption information of a second time period, during which the heating source not being activated, wherein the second time period being shorter than the first time period;
    defining heating energy consumption based on the non-heating energy consumption and the energy consumption information; and
    defining the energy consumption parameter using the heating energy consumption and the degree day information of the time period.

In an embodiment, the first time period comprises a year and the second time period comprises a month.

In an embodiment, the energy consumption may be charged based on spot prices, and the method further comprises:

receiving spot price information for the energy;
defining the heating time with a start time and a stop time; and
selecting the start time to optimize the heating time taking place during lower spot prices based on the spot price information.

According to a second example aspect of the invention there is provided an apparatus comprising:

a communication interface for transceiving information; and the apparatus configured to:

receive temperature information;
maintain energy consumption information and degree day information of a first time period;

the apparatus further comprising:

at least one processor; and
at least one memory including computer program code;

the at least one memory and the computer program code configured to, with the at least one processor, cause the apparatus to:

receive spot price information for the energy;
define an energy consumption parameter using the energy consumption information and the degree day information of the first time period;
define degree day information of a day using the temperature information;
determine daily heating energy consumption using the energy consumption parameter and the degree day information of a day;
determine a heating time needed to achieve the daily heating energy consumption;
define the heating time with a start time and a stop time;
select the start time to optimize the heating time taking place during lower spot prices based on the spot price information; and
activate a heating source of the heating system based on the selected start time.

According to a third example aspect of the invention there is provided a computer program embodied on a computer readable medium comprising computer executable program code wherein the computer executable program code, when executed by at least one processor of an apparatus, causes the apparatus to:

receive temperature information;
maintain energy consumption information and degree day information of a first time period;
receive spot price information for the energy;
define an energy consumption parameter using the energy consumption information and the degree day information of the first time period;
define degree day information of a day using the temperature information;
determine daily heating energy consumption using the energy consumption parameter and the degree day information of a day;
determine a heating time needed to achieve the daily heating energy consumption;
define the heating time with a start time and a stop time;
select the start time to optimize the heating time taking place during lower spot prices based on the spot price information; and
activate a heating source of the heating system based on the selected start time.

According to a fourth example aspect of the invention there is provided a system comprising:

a heating apparatus comprising:

a heating source for providing a heating effect using a heating

energy;

wherein the system further comprises:

a control apparatus comprising:

a communication interface for transceiving information;
at least one processor; and
at least one memory including computer program code;
the at least one memory and the computer program code configured to, with the at least one processor, cause the control apparatus to:

receive temperature information;
maintain energy consumption information and degree day information of a first time period;
receive spot price information for the energy;
define an energy consumption parameter using the energy consumption information and the degree day information of the first time period;

define degree day information of a day using the temperature information;

determine daily heating energy consumption using the energy consumption parameter and the degree day information of a day;

determine a heating time needed to achieve the daily heating energy consumption;

define the heating time with a start time and a stop time;

select the start time to optimize the heating time taking place during lower spot prices based on the spot price information; and

activate a heating source of the heating system based on the selected start time.

In an embodiment, the heating source comprises one of the following:

- fuel based heating; and
- electricity based heating.

In an embodiment, the fuel based heating utilizes at least one of the following fuels:

- natural gas;
- liquefied petroleum gas;
- fuel oil;
- biomass;
- coal; and
- wood.

In an embodiment, the electricity based heating utilizes at least one of the following:

- national grid electricity;
- local solar electricity;
- local stored electricity; and
- local wind electricity.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

BRIEF DESCRIPTION OF THE DRAWINGS

The invention will be described, by way of example only, with reference to the accompanying drawings, in which:

Fig. 1    shows a schematic picture of a system according to an example embodiment of the invention;

Fig. 2    presents an example process diagram for defining daily heating time based on different source information, in which various embodiments of the invention may be applied;

Fig. 3    presents an example block diagram of a control apparatus in which various embodiments of the invention may be applied;

Fig. 4    presents an example block diagram of a server apparatus in which various embodiments of the invention may be applied;

Fig. 5    shows a flow diagram showing operations in accordance with an example embodiment of the invention; and

Fig. 6    presents an example block diagram of a heating apparatus, such as a boiler in which various embodiments of the invention may be applied.

DETAILED DESCRIPTION

In the following description, like numbers denote like elements.

Suppliers buy electricity from generators at market rates. Spot prices of the electricity may vary throughout the day as demand changes. The variations of spot prices may change per region around a certain country. Weather is also a large factor in the demand for electricity, and hence in the wholesale electricity price. Extremes of heat and cold mean air conditioners and heaters place extra demand on the national grid as well.

Heating, for example electrical heating, consumes remarkable amount of energy, such as electricity. For the consumer, optimizing the heating system both in costs and heating effectiveness is a key factor.

In spot price electricity supply system, the spot prices during the night time may be lower than during the daytime due to the large scale variation of the demand.

The user may receive the spot price information of the electricity supplied from the energy supplier. Such information may be available online over a network access from the user apparatus to the server of the electricity supplier. Alternatively, the spot prices may be transmitted to the user within fixed time periods, such as daily, weekly, monthly or yearly, for example. Thus, the user has the spot price information available for controlling the heating system.

In an embodiment, the spot price information comprises spot prices of the electricity on hourly basis. That means that the information provides price for the electricity consumed by the supplied user per certain time period, such as an hour. Typically the spot price information may be expressed as price per MWh, such as Euros/MWh, for example.

A degree day is a measure of heating or cooling. Totalized degree days from an appropriate starting date are used to plan the planting of crops and management of pests and pest control timing. Weekly or monthly degree-day figures may also be used within an energy monitoring and targeting scheme to monitor the heating and cooling costs of climate controlled buildings, while annual figures can be used for estimating future costs. Daily degree-day figures may be used for energy monitoring and system controlling for a required amount of energy needed, for example to heat a house or an apartment.

A degree day is computed as the integral of a function of time that generally varies with temperature. The function is truncated to upper and lower limits that are appropriate for climate control. The function can be estimated or measured by different methods, in each case by reference to a chosen base temperature.

The function may be estimated by frequent measurements and continuously integrating the temperature deficit or excess. Each day's temperature profile may be treated as a sine wave with amplitude equal to the day's temperature variation, measured from max and min values, and summing up the daily results in another option. Furthermore, the function may be estimated as above, but calculating the daily difference between mean temperature and base temperature. Even furthermore, another solution is as previous, but using a modified formulae on days when the max and min straddle the base temperature. Also, a zero degree-day in energy monitoring and targeting may be defined, when either heating or cooling consumption is at a minimum, which is useful with power utility companies in predicting seasonal low points in energy demand.

A degree day for heating is a measurement designed to reflect the demand for energy needed to heat a building. It is derived from measurements of outside air temperature. The heating requirements for a given structure at a specific location are considered to be directly proportional to the number of degree days at that location. A similar measurement, degree day for cooling, reflects the amount of energy used to cool a home or business.

Degree days for heating are defined relative to a base temperature that corresponds to the outside temperature above which a building needs no heating. The most appropriate base temperature for any particular building depends on the temperature that the building is heated to, and the nature of the building (including the heat-generating occupants and equipment within it). The base temperature is usually an indoor temperature which is adequate for human comfort. Internal gains such as electronic devices and human heating effect may increase this temperature by about 1 to 2°C.

For calculations relating to any particular building, degree day for heating should be selected with the most appropriate base temperature for the building. However, for historical reasons degree day for heating is often made available with base temperatures such as 16°C or 18°C that are base temperatures approximately appropriate for a good proportion of buildings. Also, base temperature of 17°C is used at least in Finland, but also 19°C may be used. Because the base temperature can be chosen and it can therefore vary, the base temperature used in calculating the heating degree days has to be presented.

There are a number of ways in which degree days for heating can be calculated: the more detailed a record of temperature data, the more accurate the degree day that can be calculated. The degree days for heating are often calculated using simple approximation methods that use daily temperature readings instead of more detailed temperature records such as half-hourly readings. One popular approximation method is to take the average temperature on any given day, and subtract it from the base temperature. If the value is less than or equal to zero, that day has zero degree days for heating. But if the value is positive, that number represents the number of degree days for heating on that day. This method works satisfactorily if the outside air temperature does not exceed the base temperature. In climates where this is likely to occur from time to time, there are refinements to the simple calculation which allow some 'credit' for the period of the day when the air is warm enough for heating to be unnecessary. This more accurate algorithm enables results to be computed in temperate climates (maritime as well as continental) throughout the year (not just during a defined heating season) and on a weekly as well as monthly basis.

However, this is a theoretical approach as the level of insulation of a building affects the demand for heating. For example temperatures often times drop below the base temperature during night (daily low temperature in diurnal variation), but because of insulation heating is unnecessary. In the end of spring and in the beginning of fall or in the winter depending on the climate, sufficient insulation keeps the indoor temperature higher than the outdoor temperature with little or no heating. Thus, even if the heating degree days indicate a demand for heating sufficient insulation of a building can make heating unnecessary. Such factors may be taken into consideration by the heating system controlled by a control apparatus. Such control system may learn over time of the heating features relating to the house and fine-tune the control features. Degree days for heating may be calculated based on the outside temperature information and the base temperature information for a given apartment or a house and such degree day information may be then used to calculate and control the heating time.

In an embodiment, daily heating energy consumption is determined based on the degree days. The required heating energy may then be provided within an optimal time of the day to cost-optimize the heating.

If the outdoor temperature decreases, the heating time should increase to match the degree day for heating. However, such increasing of the heating time may cause extra costs due to the spot price system of the energy. Thus, the increase of the heating time may be taken into consideration in controlling the heating system to provide heating using optimal spot prices of the energy, such as electricity.

In an embodiment, a method, an apparatus and a system is provided that can be used for controlling a heating system, especially selecting the optimal heating time used for the heating system according to spot price energy supply and changing outdoor temperatures.

In an embodiment, an electricity based heating source may be implemented in the heating apparatus. The heating apparatus may be capable of using spot price electricity heating and controlled by a control apparatus operable by a user.

Spot price based energy, such as electricity, gas, oil, etc., may comprise any energy source provided with energy prices changing within certain time periods, for example hourly-based pricing. The time period for possibly changing the price may be defined dynamically depending on the service and nature of the energy.

Spot price is thus the current price at which a particular energy can be bought at a specified time in the marketplace.

In an embodiment, an electricity based heating source may further utilize thermal energy in the heating apparatus. Such heating apparatus may be, for example, a heat pump. The heat pump transfers thermal energy from a heat source to a heat sink. Heat pumps can move thermal energy in a direction which is opposite to the direction of spontaneous heat flow. The heat pump uses energy to accomplish the desired transfer of thermal energy from the heat source to the heat sink. Heat pumps are used to provide heating because less high-grade (i.e., low-entropy) energy is required for their operation, than is provided by the released heat. Most of the energy for heating comes from the external environment, and only a fraction comes from electricity (or some other high-grade energy source). In electrically powered heat pumps, the heat transferred can be three or four times larger than the electrical power consumed, giving the system a Coefficient of Performance (COP) of 3 or 4, as opposed to a COP of 1 of a conventional electrical resistance heater, in which all heat is produced from input electrical energy. Reversible heat pumps may be used to work in either thermal direction, in order to provide heating or cooling to the internal space.

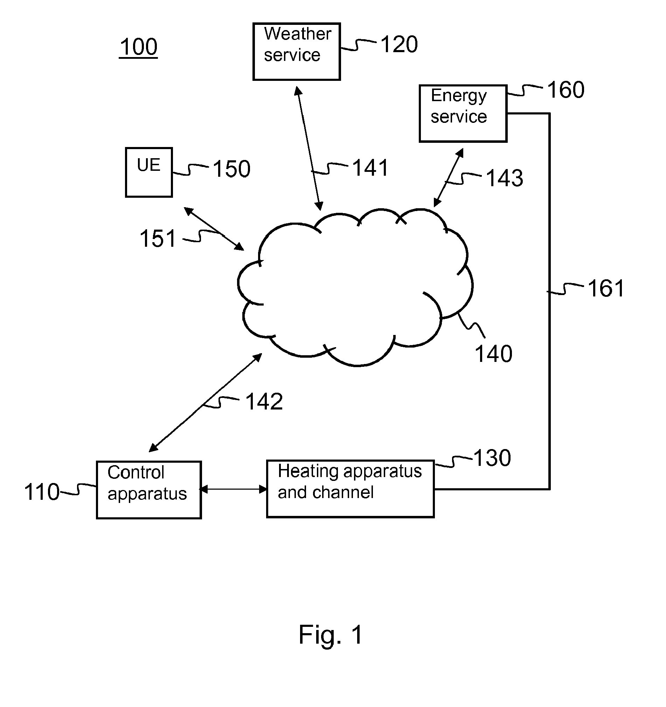

Fig. 1 shows a schematic picture of a system 100 according to an example embodiment of the invention. The system 100 comprises an apparatus 110 configured to control heating of the system 100. The apparatus 110 may be connectable to a heating apparatus 130. The heating apparatus 130 is configured to provide the heat to a limited environment, such as a building. In an embodiment, the heating apparatus and channel 130 may comprise electrical heating devices or a furnace providing heating effect to circulating intermediary fluid comprising for example air, steam or water. The heating apparatus 130 is connected to an energy service 160 over connection 161. The energy service 160 may comprise an energy supplier for electricity, for example. The supplier 160 may provide both electricity and electricity related information, such as price information over connection 161. The connection 161 may comprise several connections, separate connections for electricity and data, for example. The supplier 160 may provide electricity related information, such as price information also over connection 143 to a network 140. Over the network 140 the electricity related information is available to the control apparatus 110 over a connection 142.

In an embodiment, the heating apparatus 130 comprises a furnace comprising an electricity-based heating source; and the furnace is further configured to heat the intermediary fluid using the electricity-based heating source.

In an embodiment the control apparatus 110 is configured to be connected to a network 140, such as Internet, over a data connection 142. The data connection 142 may be a wired connection or a wireless connection. The wired connection may comprise local area network (LAN) such as Ethernet, for example. The wireless connection may comprise wireless local area network (WLAN) or a cellular network access, for example. Data connection 143 may comprise corresponding data connection as data connection 142.

In an embodiment, the control apparatus 110 is accessible over the network to a weather server 120. The server 120 is connected to the network 140 via a data connection 141. The data connection 141 may comprise corresponding data connection as data connection 142. The control apparatus 110 may read periodically (real time or in near real time) weather information for different geographical areas, such as outdoor hourly estimated temperature or outdoor mean temperature, for example. The server 120 may receive the weather information from various sources, but may be expected to be real time and correct to be used for controlling the heating system 100. The weather information (such as temperature information) may be fetched periodically from the server 120 to the control apparatus 110 or pushed by the server 120 to the control apparatus 110.

In an embodiment, the supplier 160 may provide electricity related information via a separate server similar to server 120. Such electricity related information may comprise price information. Over the network 140 the electricity related information is available to the control apparatus 110 over a connection 142. The price information may be gathered from several sources.

In an embodiment, a control apparatus 110 controls the heating apparatus 130 with a relay or similar signaling mechanism and selects the active heating times for the heating source. The heating source may comprise, for example, electricity based heating source. Furthermore, different electricity sources may be provided, such as national electricity grid and local solar electricity. The selection of which energy source is utilized and for how long period for a heating effect, may be done, for example, on hourly basis or on any user defined period basis. Hourly basis may be the granularity of electricity price, for example. If the granularity of pricing is smaller, a shorter time period may be selected dynamically. Further if the granularity is greater, a longer time period may be selected.

In an embodiment, the system 100 may comprise a user equipment 150 connected to the network 140 over a data connection 151. The data connection 151 may comprise corresponding data connection as data connection 142. The user equipment 150 may comprise, for example, a mobile phone, a tablet, a laptop, a PDA or a computer. The user equipment 150 may be used to access the apparatus 110 remotely and to control the heating. Such controlling may comprise switching on/off the heating, selecting certain heating source of the apparatus 110, adjusting spot price information, adjusting degree day information, base temperature or setting up parameters for automatic heating control for the heating apparatus 110, for example. The user equipment 150 may be capable of downloading and locally executing software program code. The software program code may be a client application of a control application running on the control apparatus 110 of the system 100.

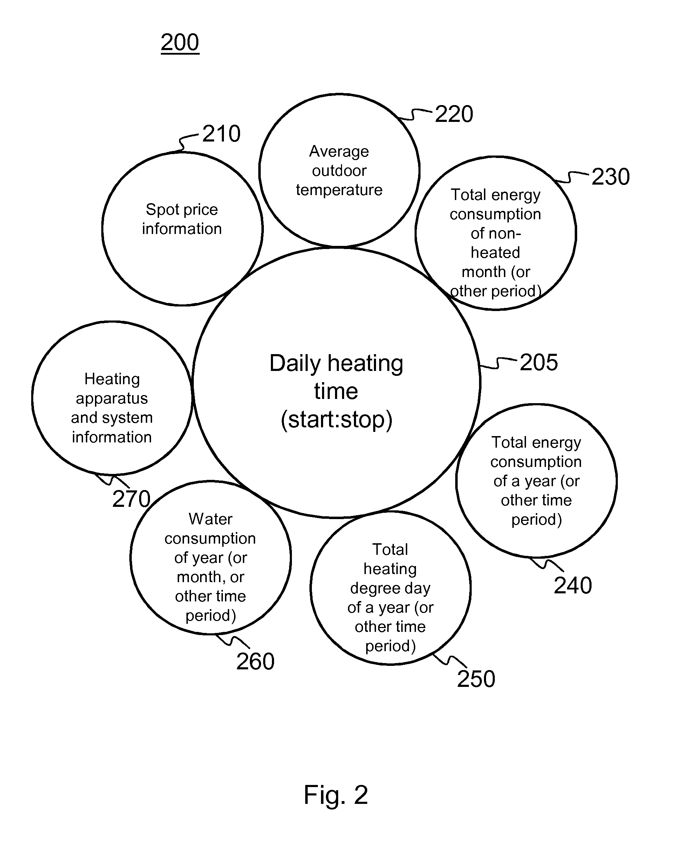

Fig. 2 shows an example process diagram 200 for defining daily heating time 205 based on different source information 210-270, in which various embodiments of the invention may be applied. At least one source information 210-270 may be used for defining the daily heating time 205.

In an embodiment, the daily heating time 205 may be calculated, when needed information is available. First input information 210 may comprise spot price information for the heating energy, such as electricity. Second input information 220 may comprise an average outdoor temperature on the day in question. The temperature information 220 may be received from a weather server over a network or provided by a local temperature sensor connected to the control apparatus. Third input information 230 may comprise total energy consumption of a time period without heating, such as a month like August, for example. Such time period or month should be selected, if possible, when no heating is activated at all but otherwise normal amount of energy, such as electricity, is used. Thus no holiday season month should be selected but a month when the building is accommodated normally.

Fourth input information 240 may comprise total energy consumption of a time period, such as a year. Such information may be available based on earlier electricity consuming information, such as electricity invoice information. A fifth input information 250 may comprise heating degree day of year that may be pre-defined to the control apparatus or received from the network and provided by a service server, such as supplier server or weather information server for certain geographical location. Sixth input information 260 may comprise water consumption of a time period, such as a year or a month. Such information may be received from the earlier water consumption history information, for example. The water consumption information may be used for defining how much heating energy may be needed for consumed hot water during a time period.

Seventh input information 270 may comprise at least one information relating to the heating apparatus 130 or the heating system. Such input information may comprise, for example, heating capacity of the boiler, the heating power of the heating resistance and boiler temperatures. Furthermore, the information 270 may comprise status of a relay in the system or status of a thermostat in the system. The heating capacity may be used to detect the level of available capacity in the boiler. A maximum heating capacity may be determined based on the heating system parameters, such as amount of water and maximum temperature of the boiler water. Measured capacity may be determined based on the measured amount of water in the boiler and the measured temperature of the water. The measured capacity may then be compared to the maximum capacity to know the current level. Such information may be used for example to prevent heating if the measured capacity is already at the maximum level.

In an embodiment, heating energy consumption [kWh] of a year (EY_H) may be calculated by a formula:

$$EY\_H = ET - T*EAugust\_T *k$$

Term ET may correspond to total energy consumption of the time period, such as a year for example. Such ET may be found from history data, such as electricity invoice data. Term T may correspond to the time period in months, for example. Term EAugust_T may correspond to total energy consumption of a month when no heating is active, such as August for example. Such value may be received from history data, such as electricity invoice data. Term k may correspond to a constant that reflects increasing of household electricity consumption during winter time, for example, default value being 1.1.

It is supposed that there is at least one month during a year when heating is not needed but electricity consumption is at normal level. Such month may be for example August when no heating energy consumption exists. It is possible to use consumption information of any other summer month as well, but the selected month should be such that the house is in normal condition and usage, not in a holiday season for example.

In an embodiment, it is possible to use different time period than year for the time period EY_H and ET. The period may be six months, four months, three months, two years or three years, for example.

In an embodiment, consumption of heating energy per degree day [kWh/Kd] of a house or a building may be defined using following formula:

$$ES = EY\_H / SY$$

Term SY may correspond to degree day [Kd] of a time period that energy EY_H has been calculated, for example over a year. The degree day of a year SY may be received by a control apparatus from the network and provided by an energy supplier service or weather service, for example.

In an embodiment, degree day of a particular day corresponding to term SD may be calculated by following formula:

$$SD = TIN\_REF - TOUT$$

Term TIN_REF may correspond to reference internal room temperature, such as 17 °C or 18 °C, for example. Typically, on top of this reference temperature, people and household electricity may warm 3 - 4 °C more. Term TOUT may correspond to outdoor mean temperature, for example.

In an embodiment, needed heating energy [kWh] may be calculated for each day by following formula:

$$EY\_D = ES * SD$$

In an embodiment, daily electricity energy [kWh] for tap water heating EW_D may be estimated by following formula:

$$EW\_D = VY / 365 * f * TW * cm\_w$$

Term VY may correspond to water consumption [m3] per year. Term f may correspond to hot water rate of the total water consumption. Default value for the term f may be given 0.5, mapping to 50%. Term TW may correspond to temperature difference between input and output water of a boiler heating the water. Default value for term TW may be 50 K (output: 55 °C / input: 5 °C). Term cm_w may correspond to heat capacity of water that may be estimated to be 4.182 kJ/Kkg equaling to 1.16kWh / Km3.

A relay of a boiler is a part of the boiler system which triggers the boiler to release heat when a thermostat calls for it. The thermostat is a device which measures the temperature in the boiler, and when the temperature gets below a threshold value, the relay is triggered to provide heating for the boiler. The relay of a boiler can be controlled by the controlling apparatus for carrying out embodiments of the invention.

In an embodiment, total daily energy consumption [kWh] of the heating system may be calculated using formula:

$$EHS = EY\_D + EW\_D$$

The total daily energy consumption EHS thus takes into consideration heating energy needed for temperature maintaining and tap water heating.

The control apparatus 110 may receive all the needed information to calculate the total daily energy consumption either over the network connection 142, inputted by the user manually to the control apparatus 110, fetched from the heating apparatus 130 history data or estimated by a client application running in the control apparatus 110.

After determining the daily heating energy consumption EHS by the control apparatus 110 and knowing the heating power of the heating apparatus 130, a heating time needed to achieve the daily heating energy consumption may be determined. Such time may equal to certain amount of hours, for example. Next, the control apparatus may check the spot price information of the electricity supplier and activate a heating source of the heating apparatus 130 based on the determined heating time. The heating time comprising start and stop time may be selected in such a way that cheap spot prices may be used, as much as possible.

In an embodiment, the control apparatus 110 may also adjust the heating power of the heating apparatus 130 to shorten the heating time if needed for certain spot prices.

In an embodiment, at least one source information 210-270 of Fig.2 may be determined by measuring available information relating to the heating system. For example, fourth source information of total energy consumption 240 and/or third source information of total energy consumption of non-heated period 230 may be calculated. By measuring total power consumption, an active/inactive status of the heating source, such as electrical resistance, may be determined. By doing this, the total heating energy of the heating source and the household energy (for non-heating) may be determined. Furthermore, such energy information may be compared to the degree day of a time period the determined energy information. By doing this, the total energy consumption ET of the time period, such as a year for example, and non-heating energy consumption EAugust_T may be determined automatically without any need for user input, for example. Another option is to measure directly the power of the heating source to determine the heating energy for a time period. Furthermore, active/inactive status of the heating source may be detected based on a thermostat control signal or a relay status signal, for example.

In an embodiment, capacity of a heating element, such as boiler water, may be determined by measuring the drop of the boiler water temperature with certain outdoor temperatures. Furthermore, the relationship between the heating resistance and the boiler may be determined by measuring the rise of the boiler water temperature with certain outdoor temperatures. By doing this, the capacity of the boiler, the heating power of the heating resistance and temperatures (such as TW) of the boiler is not needed to be provided by the user but corresponding information may be determined automatically by the controller apparatus 110.

In an embodiment, capacity of the heating apparatus, such as boiler water may be determined based on measured water temperature and detected amount of water. Both information items may be detected using sensors of the boiler.

An alternative heating embodiment may be such that the thermostat of the heating system is set at maximum, for example at 85°C, but the capacity of the boiler is not heated to the maximum but depending on the measured outdoor temperature. For example during warmer summer months the temperature of the water may be heated to 60°C no matter the thermostat is set to a higher value, such as 85°C.

In an embodiment, a heating system is provided, where a heating energy can be selected between electricity and oil, for example. Similarly, selection could be made between locally produced solar power and nuclear power from national electricity grid, for example.

In an embodiment, instead of heating system, the invention is applicable also for cooling. In such case, the apparatus 130 comprises at least one cooling source, a controller apparatus 110 for controlling the cooling source and a cooling channel for circulating a cooling fluid around an environment, such as a building, for example.

The control apparatus 110 is configured to provide controlling signals to heating system and especially to heating apparatus 130 based on defined criteria and utilizing spot price information. The needed information, such as spot price and weather information may be received by the control apparatus 110 over a network connection from a server 120, 160, for example. A data transmission protocol may be configured to the control apparatus 110 and the server 120, 160 to fetch or push the information from the server 120, 160 to the control apparatus 110.

The control apparatus 110 may be integrated to the heating apparatus 130 or connected as a separate device. If connected as a separate device, the heating apparatus 130 may comprise a local connector, such as USB for example, and the control apparatus 110, such as a laptop, a tablet or a smartphone, may be connected to the apparatus 130 over the local connector. In an embodiment, the control apparatus 110 controls a relay for activating the heating apparatus 130.

In an embodiment, the control apparatus 110 comprises an algorithm and means to execute the algorithm in the control apparatus 110 to control the heating source. Based on the algorithm, a signaling mechanism between the control apparatus 110 and the heating source may be provided. Typically a relay or similar is used to control the heating source. Alternatively, a data-bus for sending commands may be used.

Embodiments of the invention provide benefits and advantages. Real-time temperature and spot price information may be used to control a heating system. For example, prices of heating hours may vary remarkably in short-term, as well as external mean temperature during a day. Both of these factors affect directly to the heating energy costs for the user. Up-to-date temperature and spot price information may be used to select a desired heating time to optimize the heating system and costs.

The control apparatus 110 may comprise an adaptation layer to convert control apparatus 110 internal communication signals to wireless/wired technology communication signals for the heating apparatus 130 and vice versa. A wireless/wired technology controller layer may be comprised to incorporate wireless/wired technology specific retransmissions.

In an embodiment, the control apparatus 110 may comprise a wireless/wired technology specific network layer to take care of communication with the adaptation layer and the heating apparatus 130 in the heating system.

In an embodiment, the set of tasks executed by the control apparatus 110 may be affected by the control apparatus capabilities. The control apparatus 110 may for example inquire heating source information, e.g. manufacturer, device type, serial number etc. The list above is not exhaustive. The control apparatus 110 may also set device configuration, for example message routing information or device wake-up interval and it turns on the transceiver within configured intervals for communication with network servers providing up-to-date information, wireless/wired technology controller or with other heating source in the system.

In an embodiment, a task execution trigger for the heating system may comprise a triggering message indicating a heating source active state. Such triggering message may be initiated by a controlling application of the control apparatus 110 or user initiated. The control apparatus 110 may send the triggering signal to be used as a task execution trigger for the heating sources in the heating apparatus 130 based on processing spot price information, weather (temperature) information and user pre-defined criteria. The active state means that the heating source is turned on and heating is possible.

When the user needs to communicate with the heating system, the user requests may be delivered by the control apparatus 110 to a desired service object of the application layer, which in turn communicates with the adaptation layer before transmitting messages via the wireless/wired technology layer to the heating source or controlling relay.

In an embodiment, the control apparatus 110 comprises cached spot price and weather information that can be updated automatically using a network connection or manually by the user. The user may also update the information in the control apparatus 110 without the network connection.

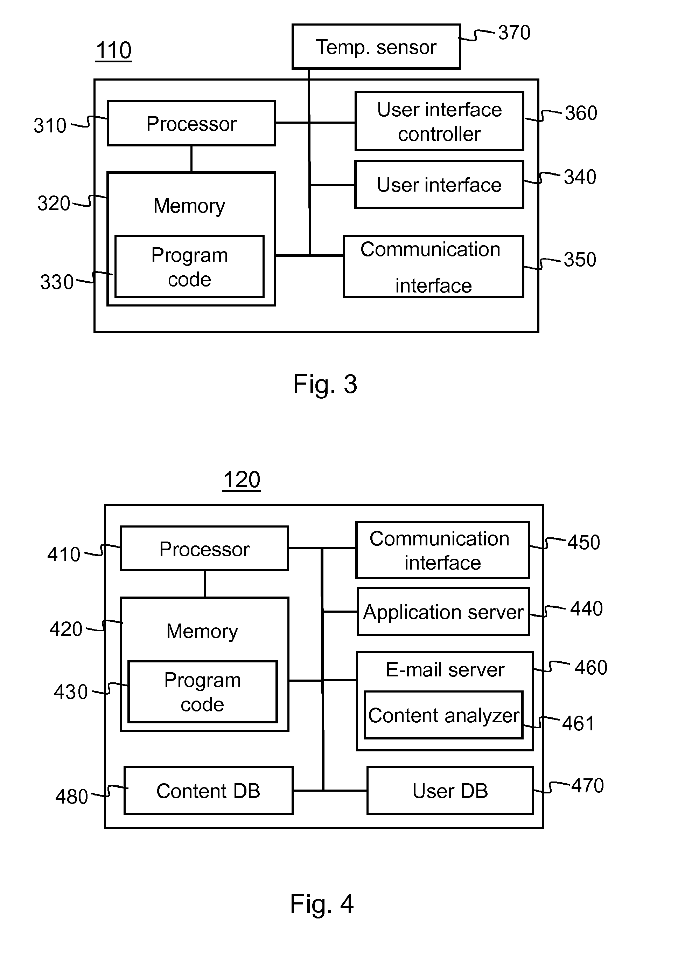

Fig. 3 presents an example block diagram of a control apparatus 110 in which various embodiments of the invention may be applied. The control apparatus 110 may be a laptop, a desktop, a tablet, a computer, a mobile phone or an integrated controller device.

A general structure of a control apparatus 110 comprises a user interface 340, a communication interface 350, a processor 310, and a memory 320 coupled to the processor 310. The apparatus 110 further comprises software 330 stored in the memory 320 and operable to be loaded into and executed in the processor 310. The software 330 may comprise one or more software modules and can be in the form of a computer program product. A service object, a service function, a heating control function, a spot price information update function, a weather information update function, a heating source activation/inactivation function, an application layer, an adaptation layer and a wireless technology layer, may be comprised in the software modules. The apparatus 110 may further comprise a user interface controller 360 and a temperature sensor 370. The sensor 370 may provide external temperature information for backup if network connection is not available and internal reference temperature.

The processor 310 may be, e.g., a central processing unit (CPU), a microprocessor, a digital signal processor (DSP), a graphics processing unit, or the like. Fig. 3 shows one processor 310, but the apparatus 110 may comprise a plurality of processors.

The memory 320 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 110 may comprise a plurality of memories. The memory 320 may be constructed as a part of the apparatus 110 or it may be inserted into a slot, port, or the like of the apparatus 110 by a user. The memory 320 may serve the sole purpose of storing data, or it may be constructed as a part of a device serving other purposes, such as processing data.

The user interface controller 360 may comprise circuitry for receiving input from a user of apparatus 110, e.g., via a keyboard, a graphical user interface shown on the display of the user interface 340 of the apparatus 110, a speech recognition circuitry, or an accessory device, such as a headset, and for providing output to the user via, e.g., a graphical user interface or a loudspeaker.

The communication interface module 350 implements at least part of data transmission. The communication interface module 350 may comprise, e.g., a wireless or a wired interface module. The wireless interface may comprise such as a WLAN, Z-Wave, Zigbee, Bluetooth™, Infrared (IR), Radio Frequency Identification (RFID), GSM/GPRS, CDMA, WCDMA, or LTE (Long Term Evolution) radio module. The wired interface may comprise such as Universal Serial Bus (USB), Local Area Network (LAN) such as Ethernet or M-bus, for example. The communication interface module 350 may be integrated into the apparatus 110, or into an adapter, card or the like that may be inserted into a suitable slot or port of the apparatus 110. The communication interface module 350 may support one data interface technology or a plurality of technologies. The apparatus 110 may comprise a plurality of communication interface modules 350. Data communication between a controller device object and a heating source may be transmitted using the communication interface 350. Furthermore, user communication data from a remote user equipment 150 may also be transmitted using the communication interface 350.

A skilled person appreciates that in addition to the elements shown in Fig. 3, the control apparatus 110 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the apparatus 110 may comprise a disposable or rechargeable battery (not shown) for powering when external power if external power supply is not available.

In an embodiment, the system 100 may comprise a user equipment 150 as illustrated in Fig. 1. The block diagram of the user equipment 150 may correspond to the block diagram of the control apparatus 110 provided in Fig. 3.

Fig. 4 presents an example block diagram of a server apparatus 120, 160 in which various embodiments of the invention may be applied.

The general structure of the server apparatus 120, 160 comprises a processor 410, and a memory 420 coupled to the processor 410. The server apparatus 120, 160 further comprises software 430 stored in the memory 420 and operable to be loaded into and executed in the processor 410. The software 430 may comprise one or more software modules and can be in the form of a computer program product.

The processor 410 may be, e.g., a central processing unit (CPU), a microprocessor, a digital signal processor (DSP), a graphics processing unit, or the like. Fig. 4 shows one processor 410, but the server apparatus 120, 160 may comprise a plurality of processors.

The memory 420 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The server apparatus 120, 160 may comprise a plurality of memories. The memory 420 may be constructed as a part of the server apparatus 120, 160 or it may be inserted into a slot, port, or the like of the server apparatus 120, 160 by a user. The memory 420 may serve the sole purpose of storing data, or it may be constructed as a part of an apparatus serving other purposes, such as processing data.

The communication interface module 450 implements at least part of radio transmission. The communication interface module 450 may comprise, e.g., a wireless or a wired interface module. The wireless interface may comprise such as a WLAN, Bluetooth, infrared (IR), radio frequency identification (RF ID), GSM/GPRS, CDMA, WCDMA, or LTE (Long Term Evolution) radio module. The wired interface may comprise such as universal serial bus (USB), for example. The communication interface module 450 may be integrated into the server apparatus 120, 160, or into an adapter, card or the like that may be inserted into a suitable slot or port of the server apparatus 120, 160. The communication interface module 450 may support one radio interface technology or a plurality of technologies. Quality of service information for heating energies (price, $CO_2$, availability etc.) associated with heating sources of a heating apparatus 110 of Fig. 1 may be received by the server apparatus 120, 160 using the communication interface 450.

The e-mail server process 460, which may receive e-mail messages sent from control apparatuses 110, heating apparatuses 130 and user equipment 150 via the network 140. The e-mail server 460 may comprise a content analyzer module 461, which checks if the content of the received message meets the criteria that are set for weather or energy service data item, for example. The content analyzer module 461 may for example check whether the e-mail message contains a valid data item to be used as weather service data item. The valid data item received by the e-mail server is then sent to an application server 440, which provides application services e.g. relating to the user accounts stored in a user database 470 and content of the content management service. Content provided by the system 100 is stored in a content database 480. The content may comprise the real-time service information, for example, such as price data of the energy or weather service data.

A skilled person appreciates that in addition to the elements shown in Fig. 4, the server apparatus 120, 160 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like.

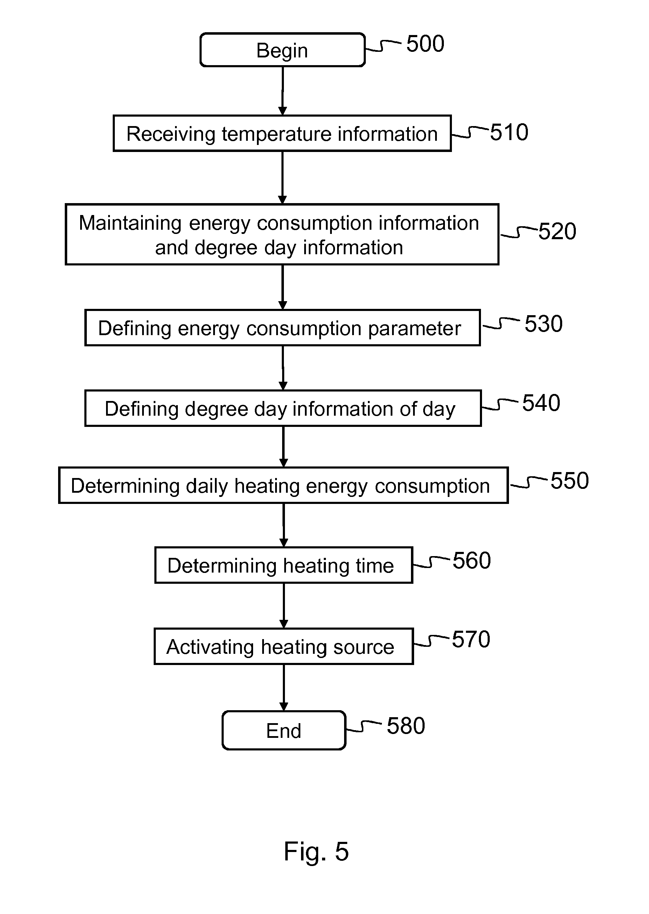

Fig. 5 shows a flow diagram showing operations in accordance with an example embodiment of the invention. In step 500, method for controlling a heating system is started. In step 510, temperature information is received. In step 520, energy consumption information and degree day information of a first time period are maintained. In step 530, an energy consumption parameter is defined using the energy consumption information and the degree day information of the first time period. In step 540, degree day information of a day is defined using the temperature information. In step 550, daily heating energy consumption is determined using the energy consumption parameter and the degree day information of a day. In step 560, a heating time needed to achieve the daily heating energy consumption is determined. In step 570, a heating source of the heating system is activated based on the determined heating time. The method is ended in step 580.

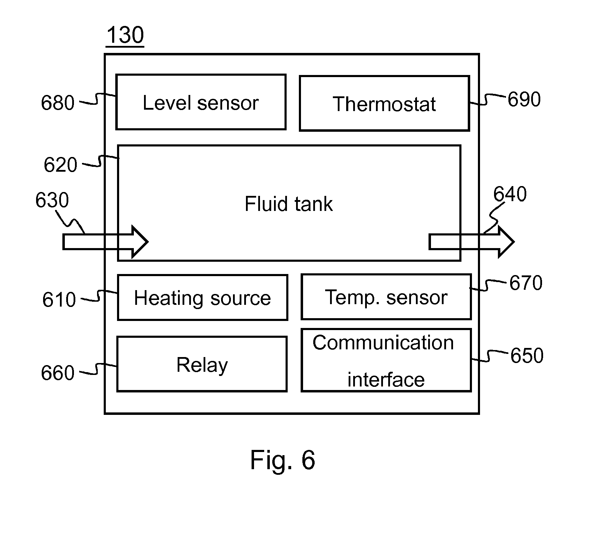

Fig. 6 presents an example block diagram of a heating apparatus, such as a boiler 130 in which various embodiments of the invention may be applied.

A general structure of a boiler 130 comprises a heating source 610, a fluid tank 620, an inlet 630, an outlet 640, a communication interface 650, a relay 660 and a temperature sensor 670. The temperature sensor 670 may detect the temperature of the fluid in the tank 620. Additionally the temperature sensor 670 may comprise a plurality of sensors to detect also temperatures of incoming fluid of the inlet 630 and/or outgoing fluid of the outlet 640. The boiler may further comprise at least one level sensor 680 to detect the amount of water in the fluid tank and a thermostat 690 to adjust the heating based on the detected temperature, for example. The thermostat 690 may also be placed to somewhere else in the heating system or the building, for example, as well as the temperature sensors 670.

The heating source 610 may comprise electricity-based heating source, such as a resistance, or fuel-based heating source, such as an oil burner, for example. The heating source 610 provides heating effect to fluid of the fluid tank 620. The fluid may comprise water, for example. The heating source 610 may be connected to an electricity source if being electricity-based and to a fuel resource if being fuel-based. Activation of the heating source 610 may be controlled by a control apparatus 110 communicatively connected to the heating source 610 via the communication interface 650. Furthermore, the relay 660 may be used to trigger the heating source 610 based on the control signals via the communication interface 650.

The communication interface module 650 implements at least part of data transmission. The communication interface module 650 may comprise, e.g., a wireless or a wired interface module. The wireless interface may comprise such as a WLAN, Z-Wave, Zigbee, Bluetooth™, Infrared (IR), Radio Frequency Identification (RF ID), GSM/GPRS, CDMA, WCDMA, or LTE (Long Term Evolution) radio module. The wired interface may comprise such as Universal Serial Bus (USB), Local Area Network (LAN) such as Ethernet or M-bus, for example. The communication interface module 650 may be integrated into the apparatus 130, or into an adapter, card or the like that may be inserted into a suitable slot or port of the apparatus 130. The communication interface module 650 may support one data interface technology or a plurality of technologies. The apparatus 130 may comprise a plurality of communication interface modules 650. Data communication between a controller device object and a heating apparatus 130 may be transmitted using the communication interface 650. Furthermore, user communication data from a remote user equipment 150 may also be transmitted using the communication interface 650.

A skilled person appreciates that in addition to the elements shown in Fig. 6, the heating apparatus 130 may comprise other elements, such as additional input/output (I/O) circuitry, sensors, processor, memory, thermal relays, powering devices, cabling etc.

In an embodiment, instead of the water boiler, the heating apparatus 130 may comprise capacitive tiles as heating elements. Otherwise the heating control may be carried correspondingly to the boiler embodiments above. Furthermore, in response to forecasted outdoor temperature decrease the capacitive tiles may be heated beforehand and even overheated with cheaper spot prices before more expensive spot prices, for example.

Various embodiments have been presented. It should be appreciated that in this document, words comprise, include and contain are each used as open-ended expressions with no intended exclusivity. If desired, the different functions discussed herein may be performed in a different order and/or concurrently with each other. Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method for controlling a heating system, wherein the energy consumption being charged based on spot prices, the method comprising:

> receiving temperature information;
> maintaining energy consumption information and degree day information of a first time period;
> **characterized in that** the method further comprising:
>
>> receiving spot price information for the energy;
>> defining an energy consumption parameter using the energy consumption information and the degree day information of the first time period;
>> defining degree day information of a day using the temperature information;
>> determining daily heating energy consumption using the energy consumption parameter and the degree day information of a day;
>> determining a heating time of a heating source of the heating system needed to achieve the daily heating energy consumption;
>> defining the heating time with a start time and a stop time;
>> selecting the start time to optimize the heating time taking place during lower spot prices based on the spot price information; and
>> activating the heating source of the heating system based on the selected start time.

2. The method of claim 1, wherein the temperature information comprises:

> an indoor reference temperature; and
> an outdoor mean temperature.

3. The method of claim 2, further comprising:

> defining the degree day information of a day by subtracting the outdoor mean temperature from the indoor reference temperature.

4. The method of any of claims 1 to 3, further comprising:

> defining the energy consumption parameter by dividing the energy consumption information with the degree day information of the first time period.

5. The method of any of claims 1 to 4, further comprising:

> determining the daily heating energy consumption by multiplying the energy consumption parameter and the degree day information of a day.

6. The method of any of claims 1 to 5, wherein the energy consumption information comprising heating energy consumption information.

7. The method of claim 6 further comprising:

estimating non-heating energy consumption based on energy consumption information of a second time period, during which the heating source not being activated, wherein the second time period being shorter than the first time period;
defining heating energy consumption based on the non-heating energy consumption and the energy consumption information; and
defining the energy consumption parameter using the heating energy consumption and the degree day information of the time period.

8. The method of claim 7, wherein the first time period comprising a year and the second time period comprising a month.

9. An apparatus comprising:

a communication interface for transceiving information; and the apparatus configured to:

receive temperature information;
maintain energy consumption information and degree day information of a first time period;

**characterized in that** the apparatus further comprising:

at least one processor; and
at least one memory including computer program code;

the at least one memory and the computer program code configured to, with the at least one processor, cause the apparatus to:

receive spot price information for the energy;
define an energy consumption parameter using the energy consumption information and the degree day information of the first time period;
define degree day information of a day using the temperature information;
determine daily heating energy consumption using the energy consumption parameter and the degree day information of a day;

determine a heating time needed to achieve the daily heating energy consumption;
define the heating time with a start time and a stop time;
select the start time to optimize the heating time taking place during lower spot prices based on the spot price information; and
activate a heating source of the heating system based on the selected start time.

10. The apparatus of claim 9, wherein the apparatus is further configured to:

adjust a heating power of the heating apparatus to shorten the heating time based on the spot price information.

11. A computer program embodied on a computer readable medium comprising computer executable program code
**characterized in that** the computer executable program code, when executed by at least one processor of an apparatus, causes the apparatus to:

receive temperature information;
maintain energy consumption information and degree day information of a first time period;
receive spot price information for the energy;
define an energy consumption parameter using the energy consumption information and the degree day information of the first time period;
define degree day information of a day using the temperature information;
determine daily heating energy consumption using the energy consumption parameter and the degree day information of a day;
determine a heating time needed to achieve the daily heating energy consumption;
define the heating time with a start time and a stop time;
select the start time to optimize the heating time taking place during lower spot prices based on the spot price information; and
activate a heating source of the heating system based on the selected start time.

12. A system comprising:

a heating apparatus comprising:

a heating source for providing a heating effect using a heating energy;

**characterized in that** the system further comprising:

a control apparatus comprising:

a communication interface for transceiving information;
at least one processor; and
at least one memory including computer program code;
the at least one memory and the computer program code configured to, with the at least one processor, cause the control apparatus to:

receive temperature information;
maintain energy consumption information and degree day information of a first time period;
receive spot price information for the energy;
define an energy consumption parameter using the energy consumption information and the degree day information of the first time period;
define degree day information of a day using the temperature information;
determine daily heating energy consumption using the energy consumption parameter and the degree day information of a day;
determine a heating time needed to achieve the daily heating energy consumption;
define the heating time with a start time and a stop time;
select the start time to optimize the heating time taking place during lower spot prices based on the spot price information; and
activate a heating source of the heating system based on the selected start time.

100

Weather service ⌇~120

Energy service ⌇~160

UE ⌇~150

⌇~141

⌇~143

151 ⌇

⌇~161

140

⌇~142

⌇~130

110⌇ Control apparatus ⟷ Heating apparatus and channel

Fig. 1

<u>200</u>

Fig. 2

110

310 — Processor

Temp. sensor — 370

User interface controller — 360

320 — Memory

User interface — 340

330 — Program code

Communication interface — 350

Fig. 3

120

410 — Processor

Communication interface — 450

420 — Memory

Application server — 440

430 — Program code

E-mail server — 460

Content analyzer — 461

480 — Content DB

User DB — 470

Fig. 4

Begin ⌇500

Receiving temperature information ⌇510

Maintaining energy consumption information and degree day information ⌇520

Defining energy consumption parameter ⌇530

Defining degree day information of day ⌇540

Determining daily heating energy consumption ⌇550

Determining heating time ⌇560

Activating heating source ⌇570

End ⌇580

Fig. 5

<u>130</u>

680 — | Level sensor | | Thermostat | — 690

620 — | Fluid tank |

630 → 640 →

610 — | Heating source | | Temp. sensor | — 670

660 — | Relay | | Communication interface | — 650

Fig. 6